# EUROPÄISCHE PATENTSCHRIFT

(11) **EP 3 773 068 B1**
(45) Veröffentlichungstag und Bekanntmachung des Hinweises auf die Patenterteilung: **15.07.2026**
(21) Anmeldenummer: 18716935.4
(22) Anmeldetag: 27.03.2018
(51) Int. Cl.: A46B 7/08, A46B 13/00, A46B 5/00, A46B 5/02, A01D 34/416, A01D 34/90

(54) **WERKZEUG FÜR EINE UNKRAUTBEFREIUNGSMASCHINE UND UNKRAUTBEFREIUNGSMASCHINE**
TOOL FOR A WEEDING MACHINE, AND WEEDING MACHINE
OUTIL POUR UNE MACHINE D'ÉLIMINATION DES MAUVAISES HERBES ET MACHINE D'ÉLIMINATION DES MAUVAISES HERBES

(43) Veröffentlichungstag der Anmeldung: 17.02.2021
(73) Patentinhaber: Alfred Kärcher SE & Co. KG, 71364 Winnenden (DE)
(72) Erfinder: SCHIFFHAUER, Walter, 71397 Leutenbach (DE); ZHANG, Hao, 71364 Winnenden (DE); REHNER, Michael, 73453 Untergröningen (DE); HAUG, Oliver, 73728 Esslingen (DE); WERLEIN, Kerstin, 71364 Winnenden (DE)
(74) Vertreter: Hoeger, Stellrecht & Partner Patentanwälte mbB
(86) Internationale Anmeldenummer: PCT/EP2018/057793
(87) Internationale Veröffentlichungsnummer: WO 2019/185123

(56) Entgegenhaltungen:
- EP-A1- 1 419 713
- DE-A1- 102012 211 611
- NL-C2- 1 018 231

## Beschreibung

Die Erfindung betrifft ein Werkzeug für eine Unkrautbefreiungsmaschine, insbesondere für Hartflächen, welches in einem Betrieb rotierend angetrieben ist, umfassend einen Halter, und eine Mehrzahl von beabstandeten Borstenbündeln, welche an dem Halter angeordnet sind.

In der nicht vorveröffentlichten deutschen Anmeldung Nr. 10 2017 121 154.3 der Alfred Kärcher GmbH & Co. KG vom 13. September 2017 ist eine Unkraut-Fugenfräse beschrieben, welche mindestens eine Bürstenscheibe umfasst, welche um eine Drehachse drehbar gelagert ist, und eine Motoreinheit mit einem Antriebsmotor für die mindestens eine Bürstenscheibe umfasst.

Aus der DE 296 11 986 U1 ist ein elektrischer Fugenreiniger bekannt, bei dem am Ende eines Führungsstabs ein Bürstenscheibenelement rotiert.

Aus der DE 296 02 694 U1 ist eine Vorrichtung zum Entfernen von Wildkräutern bekannt, welche aus einer Bürste besteht, die auf handelsüblichen Freischneidegeräten eingesetzt wird.

Aus der DE 102 47 006 A1 ist eine Maschine zum Reinigen der Fugen und der Oberfläche einer Pflasterung mit einem Gehäuse mit an einer Achse befindlichen Laufrädern und einen an einem Gehäuse angeordneten motorischen Antrieb für den Antrieb einer Bürstenscheibe oder einem Schleifteller und mit einem dem Gehäuse zugeordneten Holm mit einem Handgriff bekannt.

Aus der DE 198 40 424 A1 ist ein motorisch betriebenes, drehzahlbegrenztes Gerät für das Entfernen von Unkraut, Moos und anderen zu jätenden Gewächsen, welche in Fugen zwischen Pflastersteinen usw. wachsen, bekannt.

Aus der GB 2461536 A ist ein Reinigungsgerät mit einer Drahtbürste bekannt.

Aus der NL 1 018 231 C2 ist eine Vorrichtung zum mechanischen Entfernen von Unkraut von Wegen, umfassend einen Rahmen, der mit einer antreibbaren, drehbaren Bürste und einem Motor mit einer Antriebswelle zum Antreiben der Bürste versehen ist, bekannt.

Der Erfindung liegt die Aufgabe zugrunde, ein Werkzeug der eingangs genannten Art bereitzustellen, mit dem sich auf effektive Weise Flächen und insbesondere Hartflächen von Unkraut befreien lassen.

Diese Aufgabe wird bei dem eingangs genannten Werkzeug erfindungsgemäß dadurch gelöst, dass Borstenbündel an einem Teilkreisring an dem Halter sitzen, und dass die Anzahl der Borstenbündel an dem Teilkreisring im Bereich zwischen 8 Stück und 22 Stück liegt, wobei auf dem Teilkreisring Öffnungen liegen, in welchen ein jeweiliges Borstenbündel eingetaucht ist und dabei an einem Haltebereich des Halters fixiert ist, und wobei eine freie Länge einer Einzelborste über dem Halter in einem unbelasteten Zustand liegt im Bereich zwischen 50 mm und 70 mm.

Es hat sich gezeigt, dass, wenn Borstenbündel verwendet werden und die Anzahl der Borstenbündel in dem angegebenen Bereich zwischen 8 Stück (einschließlich) und 22 Stück (einschließlich) liegt, ein optimierter Kompromiss zwischen resultierenden Haltekräften für den Bediener und Reinigungseffizienz erreichbar ist.

Je mehr Borstenbündel vorhanden sind, desto höher sind grundsätzlich die resultierenden Haltekräfte für einen Bediener. Wenn eine entsprechende Unkrautbefreiungsmaschine batteriebetrieben ist, dann nimmt die Laufzeit je Batterieladung ab, je mehr Borstenbündel vorhanden sind. Je weniger Borstenbündel vorhanden sind, desto geringer ist die Abschlagwirkung an einer Wirkfläche und dementsprechend desto geringer ist die Reinigungseffizienz und auch die Laufruhe nimmt ab.

Durch die Anordnung von Borstenbündeln an einem Teilkreisring in der angegebenen Stückzahl ergibt sich eine Optimierung bezüglich resultierenden Haltekräften und Reinigungseffizienz. Ein Bediener kann auf effektive Weise mit dem entsprechenden Werkzeug eine Wirkfläche von Unkraut befreien.

Insbesondere lässt sich durch das erfindungsgemäße Werkzeug eine Kombination aus Abschneiden und Abreiben für Unkraut an der entsprechenden Fläche erreichen. Es ergibt sich ein effektiver Reinigungsvorgang ohne Beschädigung eines Bodens mit der entsprechenden Wirkfläche.

Insbesondere liegt dabei eine Symmetrieachse des Teilkreises koaxial zu einer Rotationsachse des Werkzeugs.

Günstig ist es, wenn die Borstenbündel (alle Borstenbündel des Werkzeugs) an einem einzigen Teilkreisring sitzen. Das Werkzeug ist dabei als eine Art von Topfbürste ausgebildet.

Es hat sich als günstig erwiesen, wenn die Anzahl von Einzelborsten in einem Borstenbündel im Bereich zwischen 8 Stück (einschließlich) und 20 Stück (einschließlich) liegt. Es ergibt sich dadurch ein optimierter Kompromiss zwischen resultierenden Haltekräften für einen Bediener und Reinigungseffizienz.

Es hat sich ferner als günstig erwiesen, wenn ein Durchmesser einer Einzelborste im Bereich zwischen 1,0 mm (einschließlich) und 2,0 mm (einschließlich) liegt. Je größer der Durchmesser einer Einzelborste ist, desto höher sind die resultierenden Haltekräfte für einen Bediener. Ferner nimmt die Laufzeit je Batterieladung bei Batteriebetrieb ab. Je kleiner der Durchmesser einer Einzelborste ist, desto geringer ist eine Abschlagwirkung und die Reinigungseffizienz nimmt ab. Bei dem angegebenen Bereich ergibt sich ein Kompromiss zwischen Haltekräften und Reinigungseffizienz, so dass sich bei hoher Reinigungseffizienz ein für einen Bediener komfortabler Betrieb ergibt.

Es liegt eine freie Länge einer Einzelborste über dem Halter in einem unbelasteten Zustand im Bereich zwischen 50 mm (einschließlich) und 70 mm (einschließlich). Die freie Länge ist diejenige Länge, mittels welcher die Einzelborste über den Halter hinausragt. Grundsätzlich ist es so, dass je länger die freie Länge ist, desto mehr sich die Borsten im Betrieb durchbiegen und in geringeren Haltekräften für den Bediener resultieren. Desto geringer ist auch die Abschlagwirkung für Unkraut an einer Wirkfläche. Je kürzer die freie Borstenlänge ist, desto steifer sind die Einzelborsten und die Reinigungseffizienz nimmt zu. Jedoch sollten die Borsten unter Berücksichtigung des Verschleißes eine bestimmte Mindestlänge aufweisen. Es
hat sich gezeigt, dass in dem angegebenen Bereich ein effizienter Betrieb ermöglicht ist.

Es ist ferner günstig, wenn eine Einzelborste in einem Borstenbündel in einem unbelasteten Zustand in einem Winkel im Bereich zwischen 40° und 60° zu einer Symmetrieachse des Teilkreisrings orientiert ist und insbesondere in einem Winkel zwischen 30° und 50° zu einer Einhüllendenebene des Halters und/oder zu einer Wirkfläche des Werkzeugs und/oder zu einer Einhüllendenebene von Enden der Borstenbündel orientiert ist. Es hat sich gezeigt, dass desto flacher das Werkzeug ausgebildet ist (desto größer der Winkel zu der Symmetrieachse ist) die Einzelborsten in einem Borstenbündel eher ausweichen und je "höher" das Werkzeug ist, das heißt je kleiner der Winkel zu der Symmetrieachse ist, desto starrer die Einzelborsten bleiben und damit desto höher die Haltekräfte sind. Die angegebenen Winkelbereiche stellen einen Kompromissbereich zwischen Bedienungskomfort und Reinigungseffizienz dar.

Bei einer vorteilhaften Ausführungsform sind die Borstenbündel gleich ausgebildet. Dadurch kann das Werkzeug auf einfache Weise hergestellt werden.

Ganz besonders vorteilhaft ist es, wenn die Borstenbündel an dem Teilkreisring gleichmäßig beabstandet sind und insbesondere in einer Umfangsrichtung gleichmäßig beabstandet sind. Dadurch ergibt sich eine symmetrisierte Ausbildung des Werkzeugs mit einfacher Herstellbarkeit und einfacher Bedienbarkeit.

Insbesondere ist das Werkzeug als Topfbürste ausgebildet.

Vorteilhafterweise sind Einzelborsten der Borstenbündel aus einem Kunststoffmaterial oder Naturfasermaterial hergestellt. Es ergibt sich dadurch ein effektiver Unkrautbefreiungsbetrieb ohne Beschädigung einer entsprechenden zu befreienden Fläche und insbesondere Hartfläche.

Ganz besonders vorteilhaft ist es, wenn die Borstenbündel zum Abschneiden und Abreiben von Unkraut (an einer entsprechenden Hartfläche) ausgebildet sind. Dadurch ergibt sich eine hohe Reinigungseffizienz.

Der Erfindung liegt ferner die Aufgabe zugrunde, eine Unkrautbefreiungsmaschine der eingangs genannten Art bereitzustellen, welche bei hoher Reinigungseffizienz auf komfortable Weise bedienbar ist.

Diese Aufgabe wird bei der eingangs genannten Unkrautbefreiungsmaschine erfindungsgemäß dadurch gelöst, dass an dem Werkzeughalter ein erfindungsgemäßes Werkzeug gehalten ist, und ein Antrieb für eine rotative Bewegung des Werkzeugs vorgesehen ist.

Es lässt sich dadurch eine Unkrautbefreiungsmaschine mit hohem Bedienungskomfort und hoher Reinigungseffizienz bereitstellen. Insbesondere lässt sich eine Unkrautbefreiungsmaschine mit hoher Manövrierbarkeit realisieren, welche auf fertigungstechnisch einfache Weise ausgebildet ist. Es lässt sich beispielsweise eine effektive Unkrautbefreiungswirkung in Eckbereichen und in Randbereichen erzielen.

Insbesondere wird ein relativ einfach ausgebildetes kostengünstiges Gerät realisierbar, mit welchem insbesondere Unkräuter und dergleichen von Hartflächen entfernbar sind und dabei ein hoher Bedienungskomfort erreicht ist.

Es hat sich als günstig erwiesen, wenn ein Betrieb mit einer Umfangsgeschwindigkeit des Werkzeugs im Bereich zwischen 23 m/s (einschließlich) und 33 m/s (einschließlich) erfolgt, wobei die Umfangsgeschwindigkeit bezogen ist auf ein Ende eines Borstenbündels in einem unbelasteten Zustand, das heißt bezogen ist auf Borstenspitzen.

Grundsätzlich sind die für einen Bediener resultierenden Haltekräfte an der Unkrautbefreiungsmaschine desto größer, je größer die Umfangsgeschwindigkeit ist. Desto größer ist auch der Verschleiß an Borsten. In einem Batteriebetrieb nimmt die Laufzeit je Akkuladung ab, desto größer die Umfangsgeschwindigkeit ist. Je kleiner die Umfangsgeschwindigkeit ist, desto geringer ist die Abschlagwirkung für Unkraut und die Reinigungseffizienz nimmt ab. Durch den angegebenen Bereich für die Umfangsgeschwindigkeit lässt sich ein Kompromiss zwischen Haltekräften (das heißt Bedienungskomfort) und Reinigungseffizienz erreichen. Es ergibt sich bei hoher Reinigungseffizienz ein hoher Bedienungskomfort für einen Bediener.

Bei einer Ausführungsform ist ein Werkzeugkopf vorgesehen, an welchem der Werkzeughalter angeordnet ist. Es ergibt sich so ein einfacher Aufbau. Es ergibt sich eine hohe Manövrierbarkeit für die Unkrautbefreiungsmaschine, so dass auch in schwieriger zugänglichen Bereichen, wie Eckbereichen oder Randbereichen eine Unkrautbefreiung möglich ist.

Ganz besonders vorteilhaft ist es, wenn der Antrieb an dem Werkzeugkopf angeordnet ist. Es lässt sich so ein niedriger Schwerpunkt für die Unkrautbefreiungsmaschine erreichen und es lässt sich ein hoher Bedienungskomfort realisieren.

Bei einer Ausführungsform sitzt der Werkzeugkopf an einer Haltestabeinrichtung, welche insbesondere so ausgebildet ist, dass ein Bediener die Unkrautbefreiungsmaschine stehend bedienen kann. Dadurch ergibt sich ein hoher Bedienungskomfort. Grundsätzlich ist es auch möglich, dass keine Haltestabeinrichtung vorhanden ist, oder die Haltestabeinrichtung mit solchen Abmessungen ausgeführt ist, dass die Unkrautbefreiungsmaschine nicht stehend betrieben ist.

Bei einer Ausführungsform ist mindestens ein Schwenkgelenk vorgesehen, über welches der Werkzeugkopf mit der Haltestabeinrichtung verbunden ist. Es lässt sich so beispielsweise auf einfache Weise eine Anpassung an eine Bedienerhöhe durchführen.

Bei einer Ausführungsform ist dem mindestens einen Schwenkgelenk eine Schwenkachse zugeordnet, welche quer zu einer Längsachse der Haltestabeinrichtung orientiert ist. Dadurch lässt sich auf einfache Weise eine Größenanpassung bezüglich eines Bedieners durchführen.

Insbesondere ist dem mindestens einen Schwenkgelenk eine Schwenkachse zugeordnet, welche quer und insbesondere senkrecht zu einer Rotationsachse des Werkzeugs orientiert ist. Dadurch ergibt sich ein effektiver Betrieb der Unkrautbefreiungsmaschine mit hoher Manövrierbarkeit.

Günstig ist es, wenn das Werkzeug lösbar an dem Werkzeughalter fixiert ist. Dadurch ergibt sich eine einfache Austauschbarkeit insbesondere bei Bürstenverschleiß. Ferner ist es auch möglich, über die Verwendung von unterschiedlichen Werkzeugen eine Anpassung an tatsächliche Gegebenheiten durchzuführen.

Bei einer Ausführungsform ist eine Schutzhaube vorgesehen, welche insbesondere an einem Werkzeugkopf angeordnet ist. Durch die Schutzhaube lässt es sich zum großen Teil verhindern, dass Schmutz und dergleichen in Richtung eines Bedieners geschleudert wird. Bei einer Ausführungsform ist die Schutzhaube als Schürze ausgebildet, welche an dem Werkzeugkopf angeordnet ist.

Die Schutzhaube ist insbesondere so angeordnet und ausgebildet, dass bei ordnungsgemäßer Bedienung und bei auf einer Wirkfläche aufgesetztem Werkzeug ein Bereich zwischen einem Bediener und dem Werkzeug zu dem Bediener hin abgedeckt ist. Dadurch lässt sich ein effektiver Bedienerschutz bei hoher Manövrierbarkeit der Unkrautbefreiungsmaschine erreichen. Es ist dadurch auch möglich, Eckbereiche und Randbereiche von Unkraut zu befreien, wobei ein Bediener optimiert vor Schmutzspritzern geschützt ist.

Bei einer Ausführungsform ist die Schutzhaube mindestens teilweise aus transparentem Material. Dadurch kann beispielsweise ein Bediener das Werkzeug auf optimierte Weise positionieren.

Es kann günstig sein, wenn die Schutzhaube mindestens in einem Teilbereich elastisch ausgebildet ist. Dadurch ist es beispielsweise möglich, die Schutzhaube auf einer Wirkfläche aufzusetzen, wobei ein Reinigungsbetrieb gewährleistet ist. Alternativ oder zusätzlich kann über die elastische Ausbildung der Schutzhaube eine effektive Reinigung der Schutzhaube durch entsprechende Deformation zur Ablösung von Verschmutzungen an dieser erfolgen.

Bei einer Ausführungsform sind ein erster Handgriff zum Halten mit einer ersten Haltehand eines Bedieners und ein beabstandeter zweiter Handgriff zum Halten mit einer zweiten Haltehand des Bedieners vorgesehen. Dadurch kann ein Bediener die Unkrautbefreiungsmaschine mit zwei Händen auf stabile Weise halten. Es ergibt sich ein komfortabler Betrieb bei hoher Manövrierbarkeit der Unkrautbefreiungsmaschine.

Bei einer Ausführungsform umfasst der erste Handgriff einen ersten Griffbereich zum Umgreifen mit der ersten Haltehand und der zweite Handgriff umfasst einen zweiten Griffbereich zum Umgreifen mit der zweiten Haltehand, wobei der erste Griffbereich und der zweite Griffbereich mindestens in einem Teilbereich quer und insbesondere senkrecht zueinander orientiert sind. Dadurch lässt sich die Unkrautbefreiungsmaschine auf einfache Weise fest halten und es ergibt sich ein komfortabler Betrieb.

Bei einer Ausführungsform ist der erste Handgriff an einem Endbereich einer Haltestabeinrichtung angeordnet (wobei grundsätzlich Teile des ersten Handgriffs noch Teile der Haltestabeinrichtung sein können) und der zweite Handgriff ist beabstandet zu dem Endbereich angeordnet. Dadurch ergibt sich eine effektive Handhabbarkeit der Unkrautbefreiungsmaschine.

Günstig ist es, wenn eine Einrichtung zur hängenden Aufbewahrung der Unkrautbefreiungsmaschine wie beispielsweise eine Öse oder ein Haken oder dergleichen vorgesehen sind. Es lässt sich die Unkrautbefreiungsmaschine dann derart aufbewahren, dass bei der Aufbewahrung Borsten des Werkzeugs nicht belastet sind. Es muss dann das Werkzeug für die Aufbewahrung nicht abgenommen werden beziehungsweise die Borsten werden nicht beschädigt.

Insbesondere ist es vorgesehen, dass bei einem ordnungsgemäßen Betrieb eine Rotationsachse des Werkzeugs quer zu einer Wirkfläche des Werkzeugs orientiert ist. Dadurch lässt sich insbesondere mit einer Topfbürste eine effektive Unkrautbefreiung an einer Hartfläche durchführen, wobei eine Reinigungswirkung über die Kombination von Abschneiden und Abreiben erreichbar ist.

Insbesondere ist eine Längeneinstellbarkeit der Unkrautbefreiungsmaschine vorgesehen. Vorzugsweise ist eine Länge zwischen einem Werkzeugkopf und einem Handgriff einstellbar. Insbesondere ist eine Längeneinstellbarkeit an einer Haltestabeinrichtung vorgesehen, an welcher ein Werkzeugkopf fixiert ist. Beispielsweise ist die Haltestabeinrichtung teleskopierbar und weist einen Haltestab und ein Gegenelement auf, wobei der Haltestab teleskopierbar lösbar (beispielsweise über Rasten beziehungsweise Bohrungen) fixierbar in dem Gegenelement eingetaucht ist.

Die nachfolgende Beschreibung bevorzugter Ausführungsformen dient im Zusammenhang mit den Zeichnungen der näheren Erläuterung der Erfindung. Es zeigen:
- Figur 1: eine perspektivische Darstellung eines Ausführungsbeispiels einer erfindungsgemäßen Unkrautbefreiungsmaschine;
- Figur 2: eine Seitenansicht der Unkrautbefreiungsmaschine gemäß Figur 1;
- Figur 3: eine Vorderansicht der Unkrautbefreiungsmaschine gemäß Figur 1;
- Figur 4: eine Draufsicht auf die Unkrautbefreiungsmaschine gemäß Figur 1;
- Figur 5: eine Seitenansicht eines Ausführungsbeispiels eines Werkzeugs der Unkrautbefreiungsmaschine gemäß Figur 1; und
- Figur 6: eine Unteransicht des Werkzeugs gemäß Figur 5.

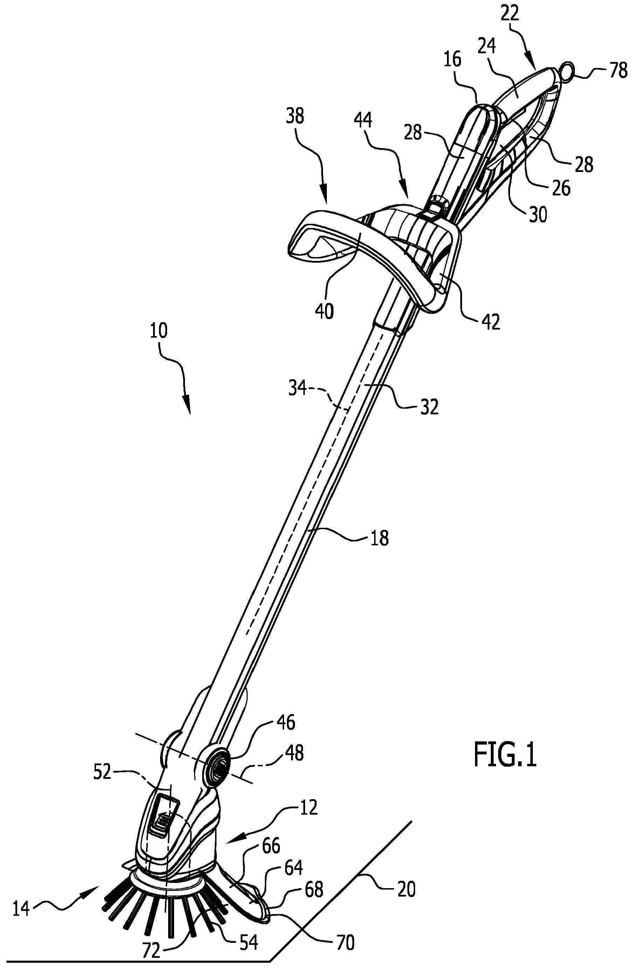

Ein Ausführungsbeispiel einer erfindungsgemäßen Unkrautbefreiungsmaschine 10 (Unkrautentfernungsmaschine), welches in den Figuren 1 bis 4 gezeigt ist und mit 10 bezeichnet ist, umfasst einen Werkzeugkopf 12. An dem Werkzeugkopf 12 ist ein distales Ende 14 der Unkrautbefreiungsmaschine 10 gebildet. Die Unkrautbefreiungsmaschine 10 hat ferner ein gegenüberliegendes proximales Ende 16.

Der Werkzeugkopf 12 sitzt an einer Haltestabeinrichtung 18. Die Unkrautbefreiungsmaschine 10 mit der Haltestabeinrichtung 18 ist insbesondere so ausgebildet, dass ein Bediener die Unkrautbefreiungsmaschine 10 stehend bedienen kann. Ein Bediener steht dabei insbesondere hinter einer Wirkfläche 20, auf welche die Unkrautbefreiungsmaschine 10 wirkt.

Es ist grundsätzlich auch möglich, dass die Unkrautbefreiungsmaschine 10 als Handgerät ausgebildet ist, wobei dann die Haltestabeinrichtung 18 eine entsprechende Länge hat beziehungsweise keine Haltestabeinrichtung vorhanden ist.

Bei der Unkrautbefreiungsmaschine 10 ist im Bereich des proximalen Endes 14 und insbesondere in einem Endbereich der Haltestabeinrichtung 18 ein erster Handgriff 22 angeordnet. Der erste Handgriff 22 hat einen ersten Griffbereich 24, welcher zum Umgreifen mit einer ersten Haltehand eines Bedieners ausgebildet ist.

Bei einer Ausführungsform ist an dem ersten Handgriff 22 im Bereich des ersten Griffbereichs 24 ein Schalter 26 zur Bedienung der Unkrautbefreiungsmaschine 10 angeordnet.

Der erste Handgriff 22 umfasst bei einer Ausführungsform einen Bügel 28, welcher mit dem ersten Griffbereich 24 und einem Haltebereich 28 verbunden ist. Der erste Griffbereich 24 ist wiederum mit dem Haltebereich 28 verbunden. Der Haltebereich 28 sitzt an einem Endbereich der Haltestabeinrichtung 18 oder ist Teil der Haltestabeinrichtung 18.

Der erste Handgriff 22 umschließt dadurch eine Öffnung 30, durch welche Finger der ersten Haltehand durchtauchbar sind.

Der erste Handgriff 22 ist insbesondere mit dem ersten Griffbereich 24 in der Art eines Pistolengriffs ausgebildet.

Die Haltestabeinrichtung 18 umfasst bei einer Ausführungsform einen Haltestab 32, welcher sich in einer Längsrichtung 34 erstreckt.

Der Haltestab 32 beziehungsweise die Haltestabeinrichtung 18 hat eine Mittelebene 36. Die Längsrichtung 34 ist parallel zu dieser Mittelebene 36 beziehungsweise liegt in dieser.

Der erste Griffbereich 24 liegt ebenfalls an dieser Mittelebene 36 und ist insbesondere symmetrisch zu dieser Mittelebene 36.

Es ist ferner ein zweiter Handgriff 38 vorgesehen. Dieser zweite Handgriff 38 ist beabstandet zu dem ersten Handgriff 22. Er weist einen zweiten Griffbereich 40 auf. Dieser zweite Griffbereich 40 ist von der zweiten Haltehand des Bedieners umgreifbar. Der zweite Griffbereich 40 ist quer zu der Längsrichtung 34 beabstandet zu der Haltestabeinrichtung 18 positioniert. Der zweite Griffbereich 40 ist quer zu dem ersten Griffbereich 24 beziehungsweise quer zu der Mittelebene 36 ausgebildet.

Insbesondere ist der zweite Griffbereich 40 an einem Bügel 42 gebildet, welcher an dem Haltebereich 28 oder an der Haltestabeinrichtung 18 positioniert ist.

Bei einer Ausführungsform umfasst der zweite Griffbereich 40 einen Mittelbereich 41, an welchem sich jeweils an einer Seite ein Bereich 41a beziehungsweise 41b anschließt. Der Mittelbereich 41 ist senkrecht zu der Mittelebene 36 orientiert und die Bereiche 41a, 41b sind schräg zu dieser orientiert.

Der zweite Handgriff 38 ist symmetrisch zur Mittelebene 36. Er hat insbesondere eine D-Form.

Bei einer Ausführungsform umfasst die Unkrautbefreiungsmaschine 10 eine Handgriffeinheit 44, welche den ersten Handgriff 22 und den zweiten Handgriff 38 aufweist, und welche als Ganzes an der Haltestabeinrichtung 18 fixiert ist.

Der Haltebereich 28 der Handgriffeinheit 44 kann dabei als Verlängerung der Haltestabeinrichtung 18 und damit auch als funktioneller Teil der Haltestabeinrichtung 18 angesehen werden.

Bei einer Ausführungsform ist es vorgesehen, dass eine Länge der Unkrautbefreiungsmaschine 10 als Abstand zwischen dem Werkzeugkopf 12 und dem ersten Handgriff 22 einstellbar ist.

Bei einer Ausführungsform umfasst die Handgriffeinheit 44 einen Eintauchbereich, in dem der Haltestab 32 teleskopierbar eingetaucht ist. Der Haltestab 32 ist beispielsweise über Rasten beziehungsweise Bohrungen an der Handgriffeinheit 44 fixierbar.

Bei einer Ausführungsform ist die Haltestabeinrichtung 18 über ein Schwenkgelenk 46 schwenkbar mit dem Werkzeugkopf 12 verbunden. Das Schwenkgelenk 46 weist eine Schwenkachse 48 auf, welche quer zu der Längsrichtung 34 beziehungsweise quer zu der Mittelebene 36 liegt.

Über das Schwenkgelenk 46 lässt sich eine Länge der Unkrautbefreiungsmaschine 10 zwischen dem distalen Ende 14 und dem proximalen Ende 16 an eine Bedienergröße anpassen.

Es ist insbesondere vorgesehen, dass das Schwenkgelenk 46 schwergängig ist beziehungsweise dem Schwenkgelenk 46 ist eine Feststelleinrichtung zugeordnet, um eine bestimmte Schwenkposition der Haltestabeinrichtung 18 zu dem Werkzeugkopf 12 feststellen zu können.

Der Werkzeugkopf 12 umfasst einen Werkzeughalter 50, welcher um eine Rotationsachse 52 rotierbar ist. Die Rotationsachse 52 ist quer zu der Längsrichtung 34 orientiert.

Die Rotationsachse 52 ist ferner quer und insbesondere senkrecht zu der Schwenkachse 48 orientiert.

Bei einer Ausführungsform liegt die Rotationsachse 52 in der Mittelebene 36.

Es ist insbesondere vorgesehen, dass bei einem ordnungsgemäßen Betrieb der Unkrautbefreiungsmaschine 10, bei dem ein an dem Werkzeughalter 50 gehaltenes Werkzeug 54 auf die Wirkfläche 20 wirkt, die Rotationsachse 52 quer und beispielsweise mindestens näherungsweise senkrecht zu der Wirkfläche 20 orientiert ist (vgl. Figur 1).

Das Werkzeug 54 ist lösbar an dem Werkzeughalter 50 gehalten.

In dem Werkzeugkopf 12 ist ein Antrieb 56 für den Werkzeughalter 50 angeordnet und durch ein Gehäuse 58 geschützt.

Bei einem Ausführungsbeispiel ist der Antrieb 56 ein Elektromotor.

Bei dieser Ausführungsform ist dem Antrieb 56 insbesondere in Untersetzungsgetriebe zugeordnet, welches drehmomentwirksam an den Werkzeughalter 50 gekoppelt ist.

Beispielsweise ist ein Stirnradgetriebe vorgesehen, welches eine Drehzahl des Antriebs 56 untersetzt von beispielsweise circa 9000 Umdrehungen pro Minute auf circa 2700 Umdrehungen pro Minute.

Es kann dabei ein Achsversatz zwischen einer Drehachse des Antriebs 56 und der Rotationsachse 52 vorgesehen sein.

Der Antrieb 56 kann bei dem Ausführungsbeispiel als Elektromotor durch Netzstrom angetrieben sein oder es kann eine insbesondere wiederaufladbare Batterieeinrichtung vorgesehen sein.

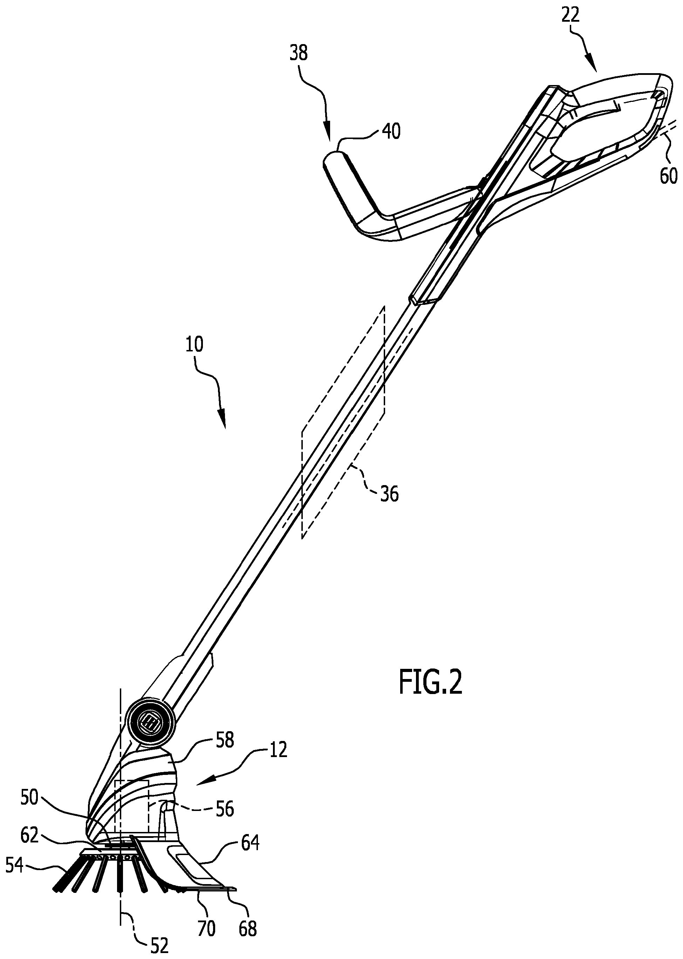

Bei einer Ausführungsform mit Netzstrombetrieb ist insbesondere ein Elektrokabel 60 (vgl. Figur 2) vorgesehen, welches an dem ersten Handgriff 22 fixiert ist und von diesem weg geführt ist. An diesem Elektrokabel 60 ist ein entsprechender Netzstecker angeordnet.

Im Falle eines Betriebs über eine Batterieeinrichtung ist insbesondere die Batterieeinrichtung an dem Haltebereich 28 (oder alternativ an dem Werkzeugkopf 12) positioniert. Die Batterieeinrichtung kann dabei abnehmbar (insbesondere zur Aufladung) oder fest an dem Haltebereich 28 fixiert sein.

Es ist grundsätzlich auch möglich, dass der Antrieb 56 ein Verbrennungsmotor ist.

Bei einer Ausführungsform umfasst der Werkzeughalter 50 eine um die Rotationsachse 52 rotierbare Scheibe 62, an welcher das Werkzeug 54 lösbar fixierbar ist. Die Scheibe 62 ist über die erwähnte Drehmomentenübertragungseinrichtung drehmomentwirksam an den Antrieb 56 gekoppelt.

An dem Werkzeugkopf 12 sitzt eine Schutzhaube 64. Die Schutzhaube 64 deckt das Werkzeug 54 nach hinten zu einem Bediener hin ab. Die Schutzhaube 64 ist bei einer Ausführungsform in Art einer Schürze 66 ausgebildet, welche an dem Werkzeugkopf 12 positioniert ist und nach unten ragt. Die Schürze 66 ist mindestens näherungsweise als Teil eines Kegelabschnittmantels ausgebildet.

Sie weist eine Art von Lippe 68 an einem unteren Ende 70 auf. Über diese Lippe 68 ist die Schutzhaube 64 an der Wirkfläche 20 aufsetzbar.

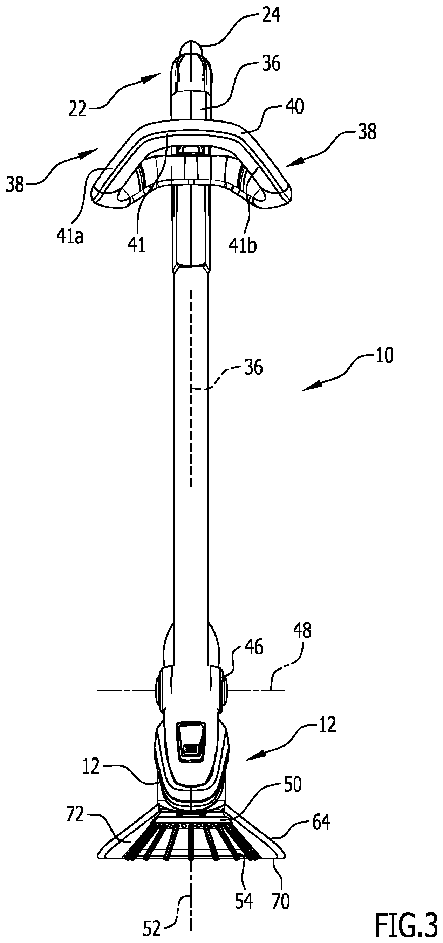

Die Schutzhaube 84 umgibt und definiert dabei einen Raum 72 (vgl. die Figuren 1 und 3), welcher nach vorne offen ist und beispielsweise hohlkegelabschnittförmig ist.

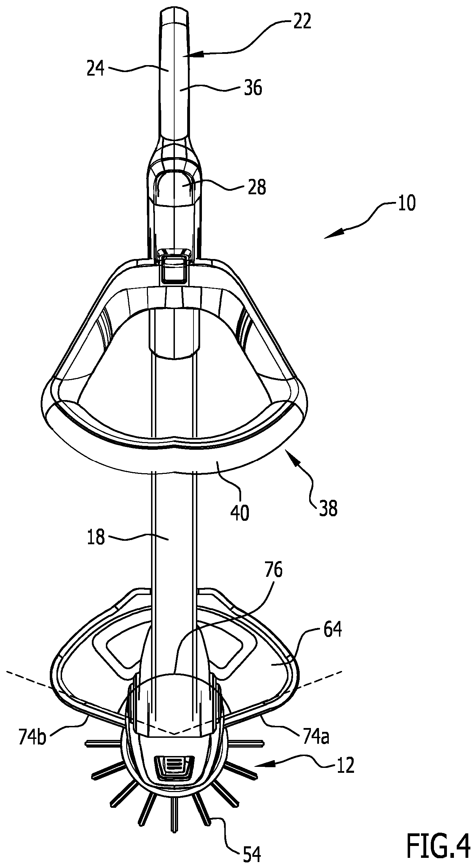

Bei einer Ausführungsform weist die Schutzhaube 84 mit ihrer Schürze 66 zwischen nach vorne weisenden Randleisten 74a, 74b einen Öffnungswinkel 76 auf (vgl. Figur 4). Dieser Öffnungswinkel 76 liegt beispielsweise im Bereich von circa 135°.

Bei einem Ausführungsbeispiel sind die Randleisten 74a, 74b winklig zueinander positioniert.

Die Schürze 66 (die Schutzhaube 64) ist bei einer Ausführungsform mindestens teilweise aus einem transparenten Material hergestellt. Dies erleichtert die Bedienung.

Es ist ferner vorgesehen, dass die Schutzhaube 64 (die Schürze 66) mindestens teilweise aus einem flexiblen (elastischen) Material hergestellt ist. Dies erleichtert die Reinigung beziehungsweise das Ablösen von anhaftendem Schmutz.

Die Schutzhaube 64 (die Schürze 66) kann mit einer Beschichtung versehen sein, um eine leichte Reinigung zu unterstützen.

Bei einer Ausführungsform umfasst die Unkrautbefreiungsmaschine 10 eine Einrichtung 78 zur hängenden Aufbewahrung (und damit Schonung des Werkzeugs 54) der Unkrautbefreiungsmaschine 10. Diese Einrichtung 78 ist beispielsweise durch eine Öse gebildet, welche an dem ersten Handgriff 22 angeordnet ist (vgl. Figur 1).

Es kann vorgesehen sein, dass der Unkrautbefreiungsmaschine 10 eine Haltegurteinrichtung zugeordnet ist, über die ein Bediener die Unkrautbefreiungsmaschine 10 halten kann. Entsprechend sind an der Unkrautbefreiungsmaschine 10 und insbesondere an der Haltestabeinrichtung 18 und/oder dem ersten Handgriff 22 entsprechende Befestigungsmittel für einen Haltegurt angeordnet (in den Zeichnungen nicht gezeigt).

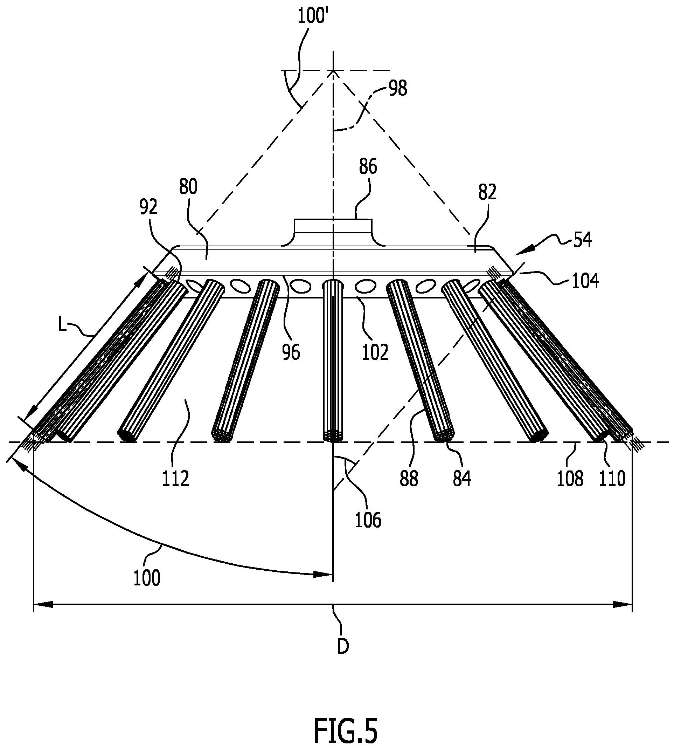

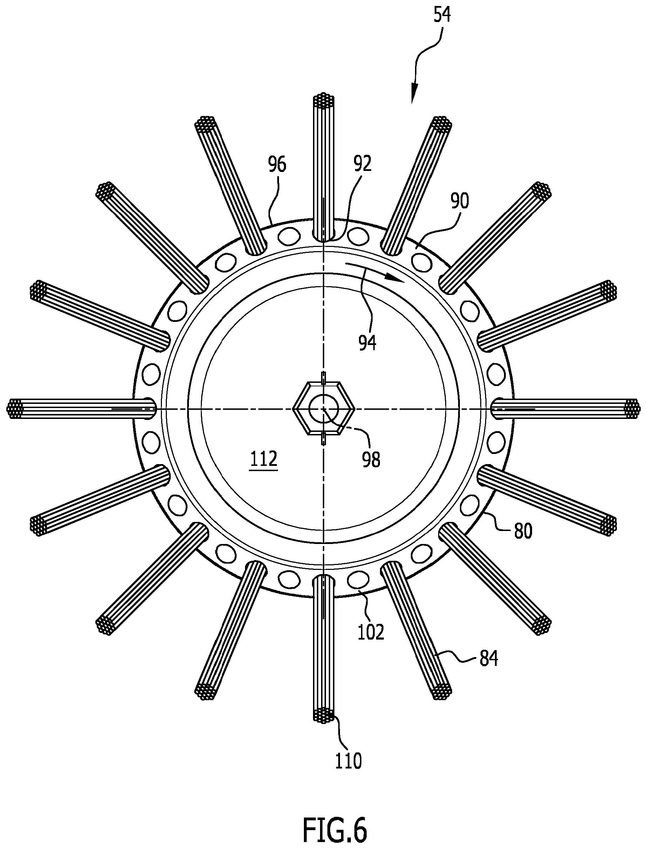

Das Werkzeug 54 ist bei einer Ausführungsform als Topfbürste ausgebildet (Figuren 5, 6).

Es umfasst einen Halter 80. Der Halter 80 weist dabei einen Haltebereich 82 für Borstenbündel 84 auf. Der Haltebereich 82 ist insbesondere scheibenförmig ausgebildet.

Der Halter 80 umfasst ferner einen Kopplungsbereich 86, welcher zur Ankopplung an den Werkzeughalter 50 dient.

Ein Borstenbündel 84 setzt sich aus einer Mehrzahl von Einzelborsten 88 zusammen.

Die Borstenbündel 84 sind an dem Haltebereich 82 fixiert und liegen dabei an einem Teilkreisring 90 (Figur 6).

Auf diesem Teilkreisring liegen 90 Öffnungen 92, in welchen ein jeweiliges Borstenbündel 84 eingetaucht ist und dabei an dem Haltebereich 80 fixiert ist.

Ein Borstenbündel 84 weist eine freie Länge L (vgl. Figur 5) auf, über welche es über den Haltebereich 82 hinausragt. Eine Gesamtlänge eines Borstenbündels 84 setzt sich zusammen aus der freien Länge L und einer Eintauchlänge in die Öffnung 92.

Die Öffnungen 92 sind in einer Umfangsrichtung 94 gleichmäßig beabstandet an dem Teilkreisring 90. Entsprechend sind die Borstenbündel 84 in der Umfangsrichtung 94 auf dem Teilkreisring 90 gleichmäßig beabstandet angeordnet.

Der Teilkreisring 90 ist insbesondere ein Kreisring mit einem Rand 96, welcher zusammenfällt mit einem Rand des Haltebereichs 82. Entsprechend ist der Haltebereich 82 als Kreisscheibe ausgebildet.

Eine Symmetrieachse 98 des Teilkreisrings 90 (und damit auch des Haltebereichs 92) liegt koaxial zu der Rotationsachse 52, wenn das Werkzeug 54 an dem Werkzeughalter 50 fixiert ist.

Die Umfangsrichtung 94 ist auf diese Symmetrieachse 98 bezogen.

Die Einzelborsten 98 in einem Borstenbündel 84 und damit das Borstenbündel 84 sind so ausgebildet und angeordnet, dass Unkraut an der Wirkfläche 20 über eine Kombination von Abschneiden und Abreiben entfernt wird, wobei die Wirkfläche 20 insbesondere eine Hartfläche wie eine Pflasterfläche ist. Die Einzelborsten 88 und damit die Borstenbündel 84 sind dabei so ausgebildet, dass keine Beschädigung dieser Hartfläche eintritt. Die Einzelborsten 54 sind aus einem Kunststoffmaterial wie PA612 oder PP oder aus einem Naturfasermaterial hergestellt. Sie sind insbesondere nicht aus einem metallischen Material hergestellt.

Es ist insbesondere vorgesehen, dass die Anzahl von Einzelborsten 88 in einem Borstenbündel 84 im Bereich zwischen (einschließlich) 8 und (einschließlich) 20 Stück liegt.

Bei einer bevorzugten Ausführungsform beträgt die Anzahl der Einzelborsten 88 in einem Borstenbündel 84 16 Stück.

Grundsätzlich ist es so, dass je mehr Einzelborsten 88 in einem Borstenbündel 84 vorgesehen sind, desto höher die resultierenden Haltekräfte für einen Bediener sind. Bei dem Betrieb einer entsprechenden Unkrautbefreiungsmaschine 10 über eine Batterieeinrichtung nimmt die Laufzeit pro Batterieladung ab, je mehr Einzelborsten 88 pro Borstenbündel 84 vorhanden sind.

Je weniger Einzelborsten 88 je Borstenbündel 84 vorhanden sind, desto geringer ist die Abschlagwirkung für Unkraut an der Wirkfläche 20, das heißt die Reinigungseffizienz nimmt ab.

Es hat sich gezeigt, dass bei dem angegebenen Bereich für die Anzahl der Einzelborsten 88 pro Borstenbündel 84 ein guter Kompromiss zwischen akzeptablen Haltekräften (und akzeptabler Laufzeit) und Reinigungseffizienz erzielt wird.

Es ist ferner vorgesehen, dass die Anzahl der gleichmäßig beabstandeten Borstenbündel 84 auf dem Teilkreisring 90 im Bereich zwischen 8 Stück (einschließlich) und 22 Stück (einschließlich) liegt.

Bei einer bevorzugten Ausführungsform beträgt die Anzahl der Borstenbündel 84 auf dem Teilkreisring 90 16 Stück.

Es hat sich gezeigt, dass je mehr Borstenbündel 84 vorliegen, desto höher die resultierenden Haltekräfte für einen Bediener sind und bei einem Batteriebetrieb dann je mehr Borstenbündel 84 vorhanden sind, die Laufzeit pro Batterieladung abnimmt. Je weniger Borstenbündel 84 vorhanden sind, desto geringer ist die Abschlagwirkung und damit die Reinigungseffizienz. Außerdem läuft die Unkrautbefreiungsmaschine 10 umso unrunder, je weniger Borstenbündel 84 vorhanden sind.

Die angegebene Anzahl von Borstenbündeln 84 auf den Teilkreisring 90 stellt einen Kompromiss zwischen Haltekräften und Reinigungseffizienz sowie Laufruhe bereit.

Insbesondere weist eine Einzelborste 88 in einem Borstenbündel 84 einen Durchmesser im Bereich zwischen 1,0 mm (einschließlich) und 2,0 mm (einschließlich) auf.

Bei einer bevorzugten Ausführungsform liegt der Durchmesser einer Einzelborste 88 im Bereich zwischen 1,4 mm (einschließlich) und 1,6 mm (einschließlich).

Es hat sich gezeigt, dass je größer der Borstendurchmesser einer Einzelborste 88 ist, desto höher die resultierenden Haltekräfte für einen Bediener sind. Ferner nimmt bei einem Batteriebetrieb die Laufzeit pro Batterieladung ab.

Je kleiner der Durchmesser einer Einzelborste 88 ist, desto geringer ist die Abschlagwirkung und die Reinigungseffizienz nimmt ab.

Der angegebene Bereich für den Durchmesser einer Einzelborste 88 stellt einen Kompromiss zwischen Haltekräften und Reinigungseffizienz dar.

Eine frei Länge L der Einzelborsten 88 (bezogen auf einen unbelasteten Zustand) liegt im Bereich zwischen 50 mm (einschließlich) und 70 mm (einschließlich).

Bei einer bevorzugten Ausführungsform liegt diese freie Länge L bei circa 60 mm.

Es hat sich gezeigt, dass je größer die freie Borstenlänge L ist, desto mehr sich die Einzelborsten 88 durchbiegen und in geringeren Haltekräften für einen Bediener resultieren, wobei dann auch die Abschlagwirkung und damit die Reinigungseffizienz sich verringert.

Je kürzer die freie Borstenlänge L einer Einzelborste 88 ist, desto steifer sind entsprechend die Einzelborsten 88 und die Reinigungseffizienz nimmt zu.

Die angegebenen Abmessungen für die freie Borstenlänge stellen einen entsprechenden Kompromiss dar, wobei auch eine Borstenabnützung berücksichtigt werden muss.

Bezogen auf den unbelasteten Zustand liegen die Borstenbündel 84 und damit auch die Einzelborsten 88 in einem Borstenbündel 84 in einem (spitzen) Winkel 100 zu der Symmetrieachse 98.

Es hat sich gezeigt, dass es vorteilhaft ist, wenn dieser Winkel 100 im Bereich zwischen 40° (einschließlich) und 60° (einschließlich) liegt. Bei einer bevorzugten Ausführungsform liegt dieser Winkel bei circa 50°.

Je größer dieser Winkel 100 ist (desto flacher das Werkzeug 54 ist), desto eher weichen die Einzelborsten 88 beziehungsweise die Borstenbündel 84 beim Unkrautbefreiungsbetrieb auf.

Je kleiner dieser Winkel 100 ist (desto steiler die Borstenbündel 84 zu dem Halter 80 angeordnet sind), desto starrer bleiben die Einzelborsten 88 und umso höher sind die Haltekräfte.

Bei dem angegebenen Winkelbereich ist ein Kompromiss zwischen diesen Anforderungen erzielt.

Es ist insbesondere vorgesehen, dass die Borstenbündel 84 alle gleich ausgebildet sind und insbesondere auch die Einzelborsten 88 alle gleich ausgebildet sind.

Grundsätzlich ist aber auch eine Variation innerhalb von Borstenbündeln 84 beziehungsweise zwischen Borstenbündeln 84 bezüglich der Ausbildung von Einzelborsten 88 möglich.

Bei einer Ausführungsform sind, um den Winkel 100 entsprechend einstellen zu können, die Öffnungen 92 an einem Bereich 102 angeordnet, welcher bezogen auf die Symmetrieachse 98 geneigt ist. In Figur 5 ist diese Neigung durch das Bezugszeichen 104 angedeutet. Ein Winkel 106 zwischen dem Bereich 102 mit der Neigung 104 und der Symmetrieachse 98 entspricht einem Winkel 180° abzüglich des Winkels 100.

Insbesondere ist der Bereich 102 bezüglich einer Einhüllenden (angedeutet durch das Bezugszeichen 104) mindestens näherungsweise senkrecht zu einer Borstenausrichtungsrichtung im Borstenbündel 84 (in unbelastetem Zustand) orientiert.

Die Rotationsachse 52 ist bezogen auf eine Ebene 108 an Enden 110 der Borstenbündel 84 senkrecht orientiert. Bezogen auf eine Einhüllende des Haltebereichs 82 ist diese senkrecht orientiert.

Ein Winkel 100' zwischen einer Einhüllendenebene des Haltebereichs 28 beziehungsweise der Wirkfläche 20, wenn die Rotationsachse 52 senkrecht zu dieser ist beziehungsweise zu der Ebene 108 ist die Differenz des Winkels 100 zu einem 90°-Winkel.

Die Borstenbündel 84 weisen nach außen, so dass sie einen hohlkegelförmigen Abschnitt 112 einschließen. Ein Durchmesser D des Werkzeugs 54 an den Enden 110 der Borstenbündel 84 (an den Spitzen der Einzelborsten 88) ist größer als ein Durchmesser des Haltebereichs 82.

Es ist insbesondere vorgesehen, dass im Betrieb der Unkrautbefreiungsmaschine 10 das Werkzeug 54 mit einer Umfangsgeschwindigkeit um die Rotationsachse 52 rotiert wird, welche im Bereich zwischen 23 m/s (einschließlich) und 33 m/s (einschließlich) liegt.

Bei einer bevorzugten Ausführungsform liegt die Umfangsgeschwindigkeit bei circa 28 m/s.

Die Umfangsgeschwindigkeit ist dabei insbesondere bezogen auf die Enden 110 der Borstenbündel 84.

Es hat sich gezeigt, dass je größer die Umfangsgeschwindigkeit ist, desto höher die resultierenden Haltekräfte für einen Bediener sind, und desto größer auch der Verschleiß der Einzelborsten 88 ist. Bei einem Batteriebetrieb nimmt ferner die Laufzeit je Batterieladung ab, desto größer die Umfangsgeschwindigkeit ist.

Je kleiner die Umfangsgeschwindigkeit ist, desto geringer ist die Abschlagwirkung für Unkraut an der Wirkfläche 20 und die Reinigungseffizienz nimmt ab.

Der angegebene Bereich für die Umfangsgeschwindigkeit stellt einen optimierten Kompromiss zwischen diesen Randbedingungen (Haltekräfte, Verschleiß, Laufzeit auf der einen Seite und Reinigungseffizienz auf der anderen Seite) dar.

Die erfindungsgemäße Unkrautbefreiungsmaschine 10 funktioniert wie folgt:
Ein Bediener steht auf einer zu reinigenden Fläche (Hartfläche) auf. Er steht dabei beabstandet zu der entsprechenden Wirkfläche 20.

Das Werkzeug 54 mit seinen Borstenbündeln 84 wird auf die Wirkfläche 20 aufgesetzt. Das Werkzeug 54 rotiert dabei beziehungsweise wird in Rotation versetzt.

Die Einzelborsten 88 der Borstenbündel 84 üben auf Unkraut an der entsprechenden Wirkfläche 20 sowohl eine Abschneidwirkung als auch eine Abreibwirkung aus. Unkraut wird dabei abgeschlagen.

Bei entsprechender Ausbildung bezüglich Anzahl von Borstenbündel 84 auf einem Teilkreisring 90, Anzahl der Einzelborsten 88 in einem Borstenbündel 84, Durchmesser der Einzelborsten 88, freie Länge der Einzelborsten 88 und Winkel 100 der Borstenbündel 84 zu der Rotationsachse 52 sowie bei Betrieb mit entsprechender Umfangsgeschwindigkeit ergibt sich eine effektive Reinigungseffizienz bei guter Bedienbarkeit für einen Bediener insbesondere bezüglich Haltekräfte, Laufzeit (bei Verwendung einer Batterieeinrichtung) usw.

Durch die Ausbildung des Werkzeugkopfs 12 mit der Schutzhaube 64 ergibt sich für einen Bediener ein komfortabler Betrieb. Insbesondere lässt sich eine Unkrautbefreiung auch an Eckbereichen und Randbereichen erreichen (aufgrund des nach vorne und seitlich offenen Raums 72).

Es erfolgt durch die Ausbildung des Werkzeugs 54 keine Beschädigungen der Hartfläche.

Durch die Anordnung des Antriebs 56 an dem Werkzeugkopf 12 ergibt sich ein kraftsparender Betrieb; der Schwerpunkt der Unkrautbefreiungsmaschine 10 als Ganzes liegt relativ niedrig.

Es ist aber grundsätzlich auch möglich, dass der Antrieb 56 beispielsweise an der Haltestabeinrichtung 18 angeordnet ist.

Grundsätzlich ist es möglich, dass an der Wirkfläche 20 nur das Werkzeug 54 mit seinen Borstenbündeln 84 für einen Unkrautbefreiungsbetrieb aufgesetzt ist und gegebenenfalls die Schutzhaube 64 mit ihrer Lippe 68 aufgesetzt ist.

Zusätzlich ist es auch möglich, dass an dem Werkzeugkopf 12 eine entsprechende Stützeinrichtung angeordnet ist, welche beispielsweise eine oder mehrere Stützräder umfasst, um eine zusätzliche Abstützung zu erhalten (in den Zeichnungen nicht gezeigt).

Durch die Ausbildung mit dem ersten Handgriff 22 und dem zweiten Handgriff 38, wobei der zweite Handgriff 38 mit dem zweiten Griffbereich 40 insbesondere D-förmig ausgeführt ist, lässt sich die Unkrautbefreiungsmaschine 10 als Ganzes leicht verdrehen bezüglich einer Drehachse, welche mindestens näherungsweise parallel zu der Längsrichtung 34 ist.

### Bezugszeichenliste

- 10: Unkrautbefreiungsmaschine
- 12: Werkzeugkopf
- 14: Distales Ende
- 16: Proximales Ende
- 18: Haltestabeinrichtung
- 20: Wirkfläche
- 22: Erster Handgriff
- 24: Erster Griffbereich
- 26: Schalter
- 28: Haltebereich
- 30: Öffnung
- 32: Haltestab
- 34: Längsrichtung
- 36: Mittelebene
- 38: Zweiter Handgriff
- 40: Zweiter Griffbereich
- 41: Mittelbereich
- 41a, b: Bereich
- 42: Bügel
- 44: Handgriffeinheit
- 46: Schwenkgelenk
- 48: Schwenkachse
- 50: Werkzeughalter
- 52: Rotationsachse
- 54: Werkzeug
- 56: Antrieb
- 58: Gehäuse
- 60: Elektrokabel
- 62: Scheibe
- 64: Schutzhaube
- 66: Schürze
- 68: Lippe
- 70: Unteres Ende
- 72: Raum
- 74a: Randleiste
- 74b: Randleiste
- 76: Öffnungswinkel
- 78: Einrichtung zur hängenden Aufbewahrung
- 80: Halter
- 82: Haltebereich
- 84: Borstenbündel
- 86: Kopplungsbereich
- 88: Einzelborste
- 90: Teilkreisring
- 92: Öffnung
- 94: Umfangsrichtung
- 96: Rand
- 98: Symmetrieachse
- 100: Winkel
- 100': Winkel
- 102: Bereich
- 104: Neigung Einhüllende
- 106: Winkel
- 108: Ebene
- 110: Ende
- 112: Hohlkegelförmiger Abschnitt

## Patentansprüche

1. Werkzeug für eine Unkrautbefreiungsmaschine (10), insbesondere für Hartflächen, welches in einem Betrieb rotierend angetrieben ist, umfassend einen Halter (80), und eine Mehrzahl von beabstandeten Borstenbündeln (84), welche an dem Halter (80) angeordnet sind, **dadurch gekennzeichnet, dass** Borstenbündel (84) an einem Teilkreisring (90) an dem Halter (80) sitzen, und dass die Anzahl der Borstenbündel (84) an dem Teilkreisring (90) im Bereich zwischen 8 Stück und 22 Stück liegt, wobei auf dem Teilkreisring (90) Öffnungen (92) liegen, in welchen ein jeweiliges Borstenbündel (84) eingetaucht ist und dabei an einem Haltebereich (82) des Halters (80) fixiert ist, und wobei eine freie Länge (L) einer Einzelborste (88) über dem Halter (80) in einem unbelasteten Zustand liegt im Bereich zwischen 50 mm und 70 mm.

2. Werkzeug nach Anspruch 1, **dadurch gekennzeichnet, dass** eine Symmetrieachse (98) des Teilkreisrings (90) koaxial zu einer Rotationsachse (52) des Werkzeugs ist.

3. Werkzeug nach Anspruch 1 oder 2, **dadurch gekennzeichnet, dass** die Borstenbündel (84) an einem einzigen Teilkreisring (90) sitzen.

4. Werkzeug nach einem der vorangehenden Ansprüche, **gekennzeichnet durch** mindestens eines der Folgenden:
- die Anzahl von Einzelborsten (88) in einem Borstenbündel (84) liegt im Bereich zwischen 8 Stück und 20 Stück;
- ein Durchmesser einer Einzelborste (88) liegt im Bereich zwischen 1,0 mm und 2,0 mm;
- eine Einzelborste (88) in einem Borstenbündel (84) in einem unbelasteten Zustand ist in einem Winkel (100) im Bereich zwischen 40° und 60° zu einer Symmetrieachse (98) des Teilkreisrings (90) orientiert und ist insbesondere in einem Winkel (100') zwischen 30° und 50° zu einer Einhüllendenebene des Halters (80) und/oder zu einer Wirkfläche (20) des Werkzeugs und/oder zu einer Einhüllendenebene (108) von Enden (110) der Borstenbündel (84) orientiert;
- die Borstenbündel (84) sind gleich ausgebildet;
- die Borstenbündel (84) an dem Teilkreisring (90) sind gleichmäßig beabstandet und sind insbesondere in einer Umfangsrichtung (94) gleichmäßig beabstandet.

5. Werkzeug nach einem der vorangehenden Ansprüche, **gekennzeichnet durch** eine Ausbildung als Topfbürste.

6. Werkzeug nach einem der vorangehenden Ansprüche, **dadurch gekennzeichnet, dass** Einzelborsten (88) der Borstenbündel (84) aus einem Kunststoffmaterial oder Naturfasermaterial hergestellt sind.

7. Werkzeug nach einem der vorangehenden Ansprüche, **dadurch gekennzeichnet, dass** die Borstenbündel (84) zum Abschneiden und Abreiben von Unkraut ausgebildet sind.

8. Unkrautbefreiungsmaschine, insbesondere für Hartflächen, umfassend einen Werkzeughalter (50), an welchem ein Werkzeug (54) gemäß einem der vorangehenden Ansprüche gehalten ist, und einen Antrieb (56) für eine rotative Bewegung des Werkzeugs (54).

9. Unkrautbefreiungsmaschine nach Anspruch 8, **dadurch gekennzeichnet, dass** ein Betrieb mit einer Umfangsgeschwindigkeit des Werkzeugs (54) im Bereich zwischen 23 m/s und 33 m/s vorgesehen ist, wobei die Umfangsgeschwindigkeit bezogen ist auf ein Ende (110) eines Borstenbündels (84) in einem unbelasteten Zustand.

10. Unkrautbefreiungsmaschine nach Anspruch 8 oder 9, **gekennzeichnet durch** einen Werkzeugkopf (12), an welchem der Werkzeughalter (50) angeordnet ist, insbesondere mit einem der Folgenden:
- der Antrieb (56) ist an dem Werkzeugkopf (12) angeordnet;
- der Werkzeugkopf (12) sitzt an einer Haltestabeinrichtung (18), insbesondere mit mindestens einem der Folgenden:
- die Haltestabeinrichtung (18) ist so ausgebildet, dass ein Bediener die Unkrautbefreiungsmaschine stehend bedienen kann;
- es ist mindestens ein Schwenkgelenk (46) vorgesehen, über welches der Werkzeugkopf (12) mit der Haltestabeinrichtung (18) verbunden ist;
- dem mindestens einen Schwenkgelenk (46) ist eine Schwenkachse (48) zugeordnet, welche quer zu einer Längsachse (34) der Haltestabeinrichtung (18) orientiert ist;
- dem mindestens einen Schwenkgelenk (40) ist eine Schwenkachse (48) zugeordnet, welche quer und insbesondere senkrecht zu einer Rotationsachse (52) des Werkzeugs (54) orientiert ist.

11. Unkrautbefreiungsmaschine nach einem der Ansprüche 8 bis 10, **dadurch gekennzeichnet, dass** das Werkzeug (54) lösbar an dem Werkzeughalter (50) fixiert ist.

12. Unkrautbefreiungsmaschine nach einem der Ansprüche 8 bis 11, **gekennzeichnet durch** eine Schutzhaube (64), welche insbesondere an einem Werkzeugkopf (12) angeordnet ist, insbesondere mit mindestens einem der Folgenden:
- die Schutzhaube (64) ist so angeordnet und ausgebildet, dass bei ordnungsgemäßer Bedienung und bei auf einer Wirkfläche (20) aufgesetztem Werkzeug (54) ein Bereich zwischen einem Bediener und dem Werkzeug (54) zu dem Bediener hin abgedeckt ist;
- die Schutzhaube (54) ist mindestens teilweise aus transparentem Material;
- die Schutzhaube (64) ist mindestens in einem Teilbereich elastisch ausgebildet.

13. Unkrautbefreiungsmaschine nach einem der Ansprüche 8 bis 12, **gekennzeichnet durch** einen ersten Handgriff (22) zum Halten mit einer ersten Haltehand eines Bedieners und einen beabstandeten zweiten Handgriff (38) zum Halten mit einer zweiten Haltehand des Bedieners, insbesondere mit mindestens einem der Folgenden:
- der erste Handgriff (22) umfasst einen ersten Griffbereich (24) zum Umgreifen mit der ersten Haltehand und der zweite Handgriff umfasst einen zweiten Griffbereich (40) zum Umgreifen mit der zweiten Haltehand, wobei der erste Griffbereich (24) und der zweite Griffbereich (40) mindestens in einem Teilbereich quer und insbesondere senkrecht zueinander orientiert sind;
- der erste Handgriff (22) ist an einem Endbereich einer Haltestabeinrichtung (18) angeordnet und der zweite Handgriff ist (38) beabstandet zu dem Endbereich angeordnet.

14. Unkrautbefreiungsmaschine nach einem der Ansprüche 8 bis 13, **gekennzeichnet durch** eine Einrichtung (78) zur hängenden Aufbewahrung der Unkrautbefreiungsmaschine.

15. Unkrautbefreiungsmaschine nach einem der Ansprüche 8 bis 14, **dadurch gekennzeichnet, dass** bei ordnungsgemäßem Betrieb eine Rotationsachse (52) des Werkzeugs (54) quer zu einer Wirkfläche (20) des Werkzeugs (54) orientiert ist, und/oder
**gekennzeichnet durch** eine Längeneinstellbarkeit.

## Claims

1. Tool for a weed clearing machine (10), in particular for hard surfaces, which tool, when in operation, is driven for rotary movement, said tool comprising a holder (80) and a plurality of spaced apart bristle bundles (84) which are arranged at the holder (80), **characterized in that** bristle bundles (84) are located on a pitch circle ring (90) at the holder (80), and **in that** the number of bristle bundles (84) on the pitch circle ring (90) is in the range between 8 and 22, wherein openings (92) are located on the pitch circle ring (90), into which openings (92) a respective bristle bundle (84) is inserted and thereby fixed to a holding portion (82) of the holder (80), and wherein a free length (L) of an individual bristle (88) beyond the holder (80), in an unloaded state, is in the range between 50 mm and 70 mm.

2. Tool in accordance with claim 1, **characterized in that** an axis of symmetry (98) of the pitch circle ring (90) is coaxial with an axis of rotation (52) of the tool.

3. Tool in accordance with claim 1 or 2, **characterized in that** the bristle bundles (84) are located on a single pitch circle ring (90).

4. Tool in accordance with any one of the preceding claims, **characterized by** at least one of the following:
- the number of individual bristles (88) in a bristle bundle (84) is in the range between 8 and 20;
- a diameter of an individual bristle (88) is in the range between 1.0 mm and 2.0 mm;
- an individual bristle (88) in a bristle bundle (84), in an unloaded state, is oriented at an angle (100) in the range between 40° and 60° with respect to an axis of symmetry (98) of the pitch circle ring (90), and is in particular oriented at an angle (100') between 30° and 50° to an envelope plane of the holder (80), and/or to an action area (20) of the tool, and/or to an envelope plane (108) of ends (110) of the bristle bundles (84);
- the bristle bundles (84) are identically configured;
- the bristle bundles (94) at the pitch circle ring (90) are evenly spaced therealong, and are in particular evenly spaced therealong in a circumferential direction (94).

5. Tool in accordance with any one of the preceding claims, **characterized by** being configured as a cup brush.

6. Tool in accordance with any one of the preceding claims, **characterized in that** individual bristles (88) of the bristle bundles (84) are made of a plastics material or a natural fiber material.

7. Tool in accordance with any one of the preceding claims, **characterized in that** the bristle bundles (84) are configured for cutting and abrading weeds.

8. Weed clearing machine, in particular for hard surfaces, the weed clearing machine comprising a tool holder (50) to which is held a tool (54) in accordance with any one of the preceding claims, and a drive (56) for rotary movement of the tool (54).

9. Weed clearing machine in accordance with claim 8, **characterized in that** provision is made for operation at a circumferential speed of the tool (54) in a range between 23 m/s and 33 m/s, wherein the circumferential speed is defined relative to an end (110) of a bristle bundle (84) in an unloaded state.

10. Weed clearing machine in accordance with claim 8 or 9, **characterized by** a tool head (12) at which the tool holder (50) is arranged, in particular with at least one of the following:
- the drive (56) is arranged at the tool head (12);
- the tool head (12) is located at a holding rod device (18), in particular with at least one of the following:
- the holding rod device (18) is configured such that the weed clearing machine can be operated by an operator in a standing position;
- at least one pivot joint (46) is provided via which the tool head (12) is connected to the holding rod device (18);
- the at least one pivot joint (46) has associated therewith a pivot axis (48) which is oriented transversely to a longitudinal axis (34) of the holding rod device (18);
- the at least one pivot joint (40) has associated therewith a pivot axis (48) that is oriented transversely, and in particular perpendicularly, to an axis of rotation (52) of the tool (54).

11. Weed clearing machine in accordance with any one of claims 8 to 10, **characterized in that** the tool (54) is releasably fixed to the tool holder (50).

12. Weed clearing machine in accordance with any one of claims 8 to 11, **characterized by** a protective hood (64) which is in particular arranged at a tool head (12), in particular with at least one of the following:
- the protective hood (64) is arranged and configured such that, in operation as normally intended and with the tool (54) placed upon an action area (20), an area between the operator and the tool (54) is covered towards the operator;
- the protective hood (54) is at least partially made of a transparent material;
- the protective hood (64) is of elastic configuration in at least a portion thereof.

13. Weed clearing machine in accordance with any one of claims 8 to 12, **characterized by** a first hand grip (22) for holding by a first holding hand of an operator and a spaced apart second hand grip (38) for holding by a second holding hand of the operator, in particular with at least one of the following:
- the first handgrip (22) comprises a first grip portion (24) for grasping by the first holding hand, and the second handgrip comprises a second grip portion (40) for grasping by the second holding hand, wherein the first grip portion (24) and the second grip portion (40), in at least a portion thereof, are oriented transversely, and in particular perpendicularly, to one another;
- the first handgrip (22) is arranged at an end portion of a holding rod device (18) and the second handgrip (38) is arranged at a distance from said end portion.

14. Weed clearing machine in accordance with any one of claims 8 to 13, **characterized by** a device (78) for hanging storage of the weed clearing machine.

15. Weed clearing machine in accordance with any one of claims 8 to 14, **characterized in that**, under the normally intended conditions of use, an axis of rotation (52) of the tool (54) is oriented transversely to an action area (20) of the tool (54), and/or
**characterized by** a capability for length adjustment.

## Revendications

1. Outil pour une machine de désherbage (10), en particulier destinée à des surfaces dures, qui est entraîné en rotation au cours du fonctionnement, comprenant un support (80) et une pluralité de faisceaux de poils (84) espacés agencés sur le support (80), **caractérisé en ce que** des faisceaux de poils (84) reposent sur le support (80) au niveau d'un sous-anneau circulaire (90) , et **en ce que** le nombre de faisceaux de poils (84) au niveau du sous-anneau circulaire (90) se situe dans la plage comprise entre 8 pièces et 22 pièces, dans lequel des orifices (92), au sein desquels un faisceau de poils (84) respectif est enfoncé et est ainsi immobilisé au niveau d'une région de retenue (82) du support (80), sont présents sur le sous-anneau circulaire (90), et dans lequel une longueur libre (L) d'un poil individuel (88) au-dessus du support (80) dans un état non mis en charge se situe dans la plage comprise entre 50 mm et 70 mm.

2. Outil selon la revendication 1, **caractérisé en ce qu'**un axe de symétrie (98) du sous-anneau circulaire (90) est coaxial par rapport à un axe de rotation (52) de l'outil.

3. Outil selon la revendication 1 ou 2, **caractérisé en ce que** les faisceaux de poils (84) reposent sur un sous-anneau circulaire (90) unique.

4. Outil selon l'une quelconque des revendications précédentes, **caractérisé par** au moins une des caractéristiques ci-dessous :
- le nombre de poils individuels (88) dans un faisceau de poils (84) se situe dans la plage comprise entre 8 pièces et 20 pièces ;
- un diamètre d'un poil individuel (88) se situe dans la plage comprise entre 1,0 mm et 2,0 mm ;
- un poil individuel (88) au sein d'un faisceau de poils (84) à l'état non mis en charge est orienté selon un angle (100) situé dans une plage comprise entre 40° et 60° par rapport à un axe de symétrie (98) du sous-anneau circulaire (90) et est orienté en particulier selon un angle (100') compris entre 30° et 50° par rapport à un plan d'enveloppe du support (80) et/ou par rapport à une surface active (20) de l'outil et/ou par rapport à un plan d'enveloppe (108) des extrémités (110) des faisceaux de poils (84) ;
- les faisceaux de poils (84) sont formés de la même manière ;
- les faisceaux de poils (84) sur le sous-anneau circulaire (90) sont espacés de manière uniforme et sont espacés en particulier espacés de manière uniforme dans une direction circonférentielle (94).

5. Outil selon l'une quelconque des revendications précédentes, **caractérisé par** un mode de réalisation sous forme de brosse à pot.

6. Outil selon l'une quelconque des revendications précédentes, **caractérisé en ce que** des poils individuels (88) des faisceaux de poils (84) sont fabriqués en une matière plastique ou en une matière fibreuse naturelle.

7. Outil selon l'une quelconque des revendications précédentes, **caractérisé en ce que** les faisceaux de poils (84) sont conçus pour enlever les mauvaises herbes par découpe et par frottement.

8. Machine de désherbage, en particulier destinée à des surfaces dures, comprenant un porte-outil (50), sur lequel est retenu un outil (54) selon l'une quelconque des revendications précédentes, et un entraînement (56) permettant un mouvement rotatif de l'outil (54).

9. Machine de désherbage selon la revendication 8, **caractérisée en ce qu'**un fonctionnement est prévu avec une vitesse circonférentielle de l'outil (54) située dans la plage comprise entre 23 m/s et 33 m/s, dans laquelle la vitesse circonférentielle se rapporte à une extrémité (110) d'un faisceau de poils (84) dans un état non mis en charge.

10. Machine de désherbage selon la revendication 8 ou 9, **caractérisée par** une tête d'outil (12) au niveau de laquelle est agencé le porte-outil (50), en particulier présentant une des caractéristiques ci-dessous :
- l'entraînement (56) est agencé au niveau de la tête d'outil (12) ;
- la tête d'outil (12) est installée au niveau d'un dispositif formant manche (18), en particulier présentant au moins une des caractéristiques ci-dessous :
- le dispositif formant manche (18) est réalisé de sorte qu'un opérateur peut utiliser la machine de désherbage debout ;
- au moins une articulation pivotante (46) est prévue, par l'intermédiaire de laquelle la tête d'outil (12) est reliée au dispositif formant manche (18) ;
- la au moins une articulation pivotante (46) est associée à un axe de pivotement (48) qui est orienté transversalement par rapport à un axe longitudinal (34) du dispositif formant manche (18) ;
- un axe de pivotement (48) orienté transversalement et en particulier perpendiculairement par rapport à un axe de rotation (52) de l'outil (54) est associé à la au moins une articulation pivotante (40).

11. Machine de désherbage selon l'une quelconque des revendications 8 à 10, **caractérisée en ce que** l'outil (54) est immobilisé au niveau du porte-outil (50) de manière amovible.

12. Machine de désherbage selon l'une quelconque des revendications 8 à 11, **caractérisée par** un capot de protection (64) agencé en particulier au niveau d'une tête d'outil (12), en particulier présentant au moins l'une des caractéristiques ci-dessous :
- le capot de protection (64) est agencé et réalisé de sorte que, lorsque ladite machine de désherbage est utilisée correctement et que l'outil (54) est placé sur une surface active (20), une région entre un opérateur et l'outil (54) est recouverte en direction de l'opérateur ;
- le capot de protection (54) est au moins partiellement en matériau transparent ;
- le capot de protection (64) est réalisé de manière à être élastique au moins dans une sous-région.

13. Machine de désherbage selon l'une quelconque des revendications 8 à 12, **caractérisée par** une première poignée (22) permettant de tenir avec une première main de retenue d'un opérateur et une seconde poignée (38) espacée et permettant de tenir avec une seconde main de retenue de l'opérateur, en particulier présentant au moins une des caractéristiques ci-dessous :
- la première poignée (22) comprend une première région de saisie (24) permettant de saisir avec la première main de retenue et la seconde poignée comprend une seconde région de saisie (40) permettant de saisir avec la seconde main de retenue, dans laquelle la première région de saisie (24) et la seconde région de saisie (40) sont orientées transversalement et en particulier perpendiculairement l'une par rapport à l'autre au moins dans une sous-région ;
- la première poignée (22) est agencée au niveau d'une région d'extrémité d'un dispositif formant manche (18) et la seconde poignée (38) est agencée à distance de la région d'extrémité.

14. Machine de désherbage selon l'une quelconque des revendications 8 à 13, **caractérisée par** un dispositif (78) permettant un rangement suspendu de la machine de désherbage.

15. Machine de désherbage selon l'une quelconque des revendications 8 à 14, **caractérisée en ce que**, lorsque ladite machine de désherbage est utilisée correctement, un axe de rotation (52) de l'outil (54) est orienté transversalement par rapport à une surface active (20) de l'outil (54), et/ou
**caractérisée par** une possibilité de réglage de la longueur.
